# EUROPEAN PATENT APPLICATION

(11) **EP 2 811 134 A1**
(43) Date of publication of application: **10.12.2014**
(21) Application number: 12867217.7
(22) Date of filing: 04.10.2012
(51) Int. Cl.: F01P 7/16

(54) **THERMOSTAT DEVICE**

(30) Priority: 31.01.2012 JP 2012019232
(71) Applicant: Nippon Thermostat Co., Ltd., Kiyose-shi Tokyo 204-0003 (JP)
(72) Inventor: SUDA, Hiroshi, Tokyo 204-0003 (JP)
(74) Representative: Jannig, Peter
(86) International application number: PCT/JP2012/075770
(87) International publication number: WO 2013/114676

(57) **Abstract**

[Problem] To add the functionality of a bypass passage, bypass valve, or the like to a thermostat device that controls the flow of engine cooling water, and to enable the overall structure to be simplified, the ease of assembly to be improved, and the cost to be reduced. [Solution] A thermostat device equipped with: a main valve (14) that controls the flow of cooling water between first and second passages (13, 12) provided in the cooling water circuit of an automobile engine (1); and a thermo element (15) that is provided in the first passage, and that controls the driving of the main valve in accordance with the cooling water temperature. A device body (1A) in which the thermostat device (10) is incorporated is equipped with a third passage (20). In addition, a second valve body (32), which opens/closes a connecting hole connecting the first passage and the third passage when the pressure of the cooling water in the engine cooling water circuit exceeds a prescribed pressure, is integrally incorporated with a device frame (30) that holds the thermo element.

## Description

### Technical Field

The present invention relates to a thermostat device for optimally controlling the flow of coolant in accordance with the coolant temperature, disposed in a cooling system of an automobile engine, and in particular a thermostat device that performs socalled engine coolant outlet-side control and which is usually disposed at the coolant outlet side of the engine.

### Background Art

As a conventional thermostat device of this type, a variety of different structures are known, including, for example, ones that control the flow of coolant in accordance with the coolant temperature in an automobile engine cooling system, installed as appropriate on the engine coolant outlet side or coolant intake side.

Currently, with this type of thermostat device, in order to improve heating performance and to warm up the engine quickly, when the temperature of the coolant prior to the opening of the thermostat is low, often the bypass passage is designed to be small to get more coolant flowing toward the passenger cabin heater. However, because the engine rpm before heating up is high and the load on the engine is also great, the rpm of the water pump also increases, increasing the pressure within the cooling system and risking rupture of the heater, the radiator, and the piping.

Accordingly, a configuration is known in which a bypass passage as well as a bypass valve separate from the thermostat valve are provided between the engine coolant outlet passage and the engine return passage to send coolant from the engine coolant outlet passage to the bypass passage side when the pressure inside the cooling system (the suction force of the water pump) reaches a prescribed pressure (see, for example, Patent Document 1).

Similarly, a configuration is also known in which, in a thermostat device provided on the engine coolant intake side, a bypass valve that controls communication between the return passage that leads to the engine coolant intake and the bypass passage is mounted on the end of the thermo-element configuring member in the thermostat device (see, for example, Patent Document 2).

### Prior Art Documents

### Patent Documents

Patent Document 1: JP-H03-71127-U
Patent Document 2: JP-H09-88598-A

### SUMMARY OF THE INVENTION

### Technical Problem

However, with the conventional structure described above, in the case of the former, in addition to the thermostat valve a separate bypass valve is used to configure the device, increasing the number of constituent parts and complicating the structure while complicating assembly, leading to a cost increase.

In the case of the latter, with the type of thermostat device that is provided on the engine coolant intake side, although a certain degree of effectiveness can be obtained, structurally it is impossible to adapt the device as a thermostat device of a type that is provided on the engine coolant outlet side as is, thus requiring some sort of work-around.

Further, with the conventional structure described above, since the coil spring for the bypass valve is fixed to the distal end by the thermo-element, the spring load applied to the bypass valve changes as the thermo-element advances and retreats. For example, the spring load as the thermo-element moves toward the main valve becomes greater than when the thermo-element is not moving. As a result, the design pressure at which the bypass valve operates changes, making it more difficult to maintain the pressure at a constant optimum level. A solution capable of solving all these problems at a stroke is desired.

The present invention was conceived in light of the circumstances described above, and has as its object to provide a thermostat device that also adds a bypass passage and a bypass valve capability to a thermostat valve that controls the flow of engine coolant, and moreover has a simple overall structure, reduces the number of parts, is easy to assemble, and can reduce costs.

### Means of Solving the Problem

To achieve this objective, the present invention (the invention according to claim 1) provides a thermostat device including a main valve that controls a flow of coolant between a first passage and a second passage, disposed in a cooling system of an automobile engine; and a thermo-element, disposed within the first passage, that drives the main valve in accordance with a temperature of the coolant, characterized in that a device body in which the thermostat device is installed is provided with a third passage, characterized in that a second valve, which opens and closes a connecting hole that connects the first passage and the third passage when coolant pressure inside the cooling system exceeds a prescribed pressure, is integrated into a device frame that holds the thermo-element.

The thermostat device according to the present invention (the invention according to claim 2) is as claimed in claim 1, characterized in that the second valve is configured to be movable along an axis of the device frame that holds the thermo-element and is biased by a coil spring to cover the connecting hole provided in a portion of the device frame, unrelated to movement of the thermo-element.

The thermostat device according to present invention (the invention according to claim 3) is as claimed in claim 1 or claim 2, characterized in that the coil spring that biases the second valve is configured to be held by engagement of a stopper with a cylindrical end of the device frame.

The thermostat device according to present invention (the invention according to claim 4) is as claimed in any one of claims 1 through 3, characterized in that the device body has the connecting hole that connects the first passage and the third passage disposed coaxial with the thermo-element, a cylindrical portion of the device frame is engaged and held by the connecting hole, and the device frame is pressed by and contacted against the device body by a main spring that biases the main valve to separate the first passage and the third passage.

The thermostat device according to present invention (the invention according to claim 5) is as claimed in any one of claims 1 through 4, characterized in that the thermostat device comprises a device housing that supports a first valve that configures the main valve and a thermo-element that drives the first valve, characterized in that the device frame is fitted to the thermo-element in a state in which the thermo-element is movable within the device frame, urged against a portion of the device housing by the main spring, and in that state the device housing is installed on the device body, such that the device frame is released from the engaged state and urged toward the device body by the main spring.

### Effects of the Invention

With the thermostat device according to the present invention as described above, the second valve and the bypass passage that is opened and closed by this valve are integrated into the device frame. As a result, there is no need to configure a bypass valve separate from thermostat valve as with the conventional structure, and since the thermostat device can be configured as a single integrated unit, the number of constituent parts can be decreased and the scope of design freedom of the thermostat layout can be enlarged, making it possible to achieve a more compact engine design including the cooling system.

In particular, with the present invention, the problem described in Patent Document 2 can be solved and a constant spring load can be set regardless of the operation of the thermo-element, thereby simplifying design of the bypass valve coil spring.

With to the present invention, since the second valve is coaxial with the thermo-element, the second valve can be made as a single integrated unit (either metal or plastic) with the device frame and the connecting hole. If the second valve is made of metal it may be by press-molding of the metal, and if of plastic it may be a single integrated unit. Since it has a simple structure, the parts that comprise this second valve can be produced easily, thereby facilitating production and reducing overall costs.

Further, with the present invention, an inexpensive coil spring with a simple structure can be employed, thereby facilitating assembly and reducing production costs.

With the present invention, there is no special seal structure used between the first passage and the third passage and the two passages can be separated with a simpler structure, thereby facilitating installation of the thermostat device on the engine and reducing production costs.

### BRIEF DESCRIPTION OF THE DRAWINGS

FIGS. 1(a), (b) are sectional and partial enlarged views, respectively, of main parts of one embodiment of a thermostat device according to the present invention;
FIG. 2 is an enlarged view of the main parts shown in FIG. 1(a);
FIG. 3 is a schematic exploded perspective view showing the bypass valve assembly that is the main portion of the thermostat device disassembled;
FIG. 4 is a table for explaining the operating principle of the main valve and the bypass valve of the thermostat device according to the present invention;
FIGS. 5(a), (b) are sectional views illustrating states of the thermostat device according to the present invention before and after installation on an engine block, respectively;
FIG. 6 is a schematic perspective view of the outside of the thermostat device shown in FIG. 1(a); and
FIG. 7 is a diagram of a cooling system of an automobile engine employing the thermostat device shown in FIG. 1(a).

### DETAILED DESCRIPTION OF EMBODIMENTS OF THE INVENTION

In a cooling system of an automobile engine, in particular a thermostat device for coolant outlet control provided on the coolant outlet side of the engine, the thermostat device configured to open by the difference in pressure between the coolant flowing in the engine coolant outlet passage and the return passage that leads to the engine coolant intake, and bypass passage and a pressure valve (bypass valve) that causes the coolant to bypass the engine coolant engine coolant exhaust passage and the return passage is integrated into the device frame that is also the seat for the coli spring that biases the main valve.

### First Embodiment

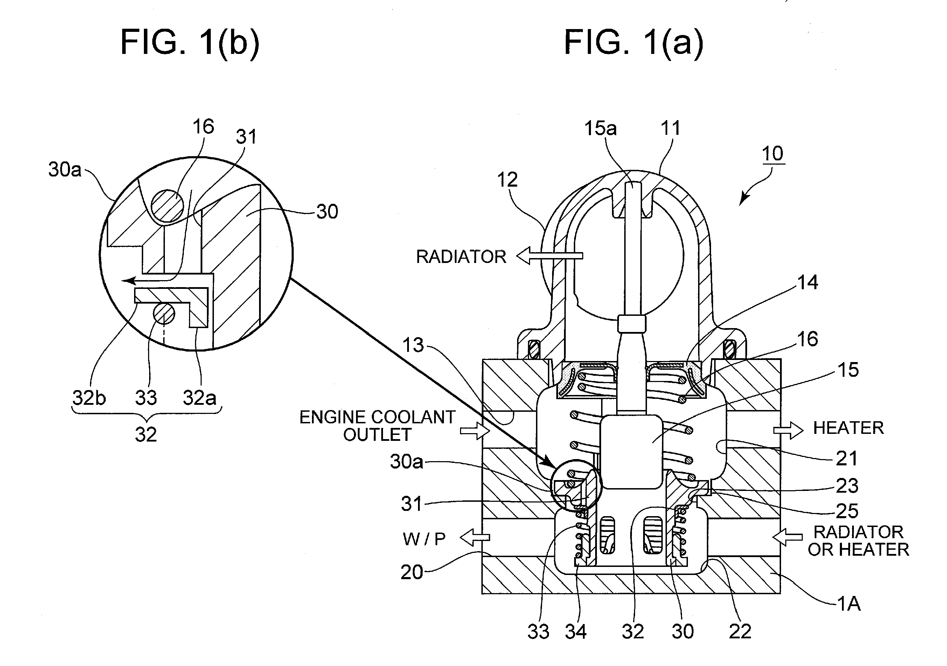

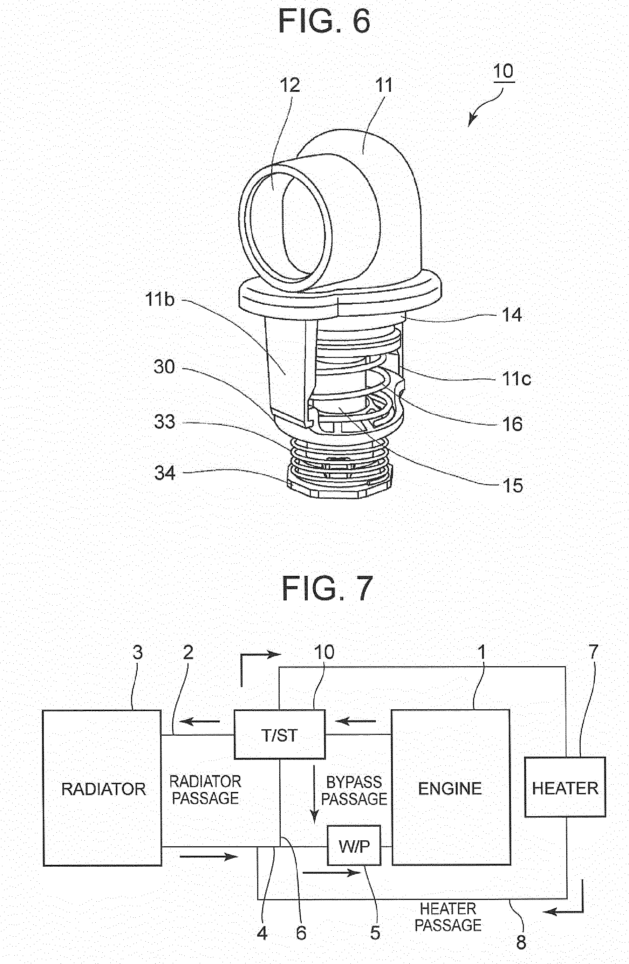

FIGS. 1-7 show one embodiment of the thermostat device according to the present invention. In these drawings, that which is indicated as a whole by reference numeral 10 is a thermostat device, having the structure shown in FIG. 1 and FIG. 6, and installed on the engine coolant outlet side of an automobile engine cooling system.

First, to briefly describe the outlines of a cooling system employing the thermostat device 10 according to the present invention using FIG. 7, reference numeral 1 designates an engine, to a coolant outlet of which a radiator 3 is connected through a radiator passage 2. A return passage 4 is connected to the engine coolant outlet, thereby completing the configuration of the coolant cooling system. Reference numeral 5 denotes a water pump (W/P), provided at the engine coolant intake.

The thermostat device 10 that is a distinctive feature of the present invention is provided on the engine coolant outlet side of the radiator passage 2. Here, a bypass passage 6 (corresponding to a connecting hole 31 described below) is connected upstream from the water pump 5.

Reference numeral 7 denotes a heater that is a heat exchanger for environmental control of the car passenger cabin and 8 denotes a heater passage. The heater passage 8 sends coolant from the engine 1 to the heater 7 and, after warming the air inside the cabin, returns the coolant to the engine 1 through the thermostat device 10. Note that, if the connection of the heater passage 8 with the return passage 4 from the radiator 3 is upstream from the water pump 5 (W/P), it can be in front of or in back of the connection between the return passage 4 and the bypass passage 6. In the present embodiment, it is at a point in front of the connection.

In the cooling system described above, coolant heated by the engine 1 is sent to the radiator 3 where its temperature is lowered and is introduced back into the engine 1 by the water pump 5 so as to cool the engine 1. In the present embodiment the thermostat device 10, as is known, is provided with a passage-switching capability that returns the coolant to the engine 1 through the bypass passage 6 (connecting hole 31) without going through the radiator 3 when the temperature of the coolant from the engine is low.

As shown in FIG. 1 and FIG. 6, the thermostat device 10 is equipped with a substantially dome-shaped device housing 11. A passage 12 that connects to the radiator passage 2, which leads to the radiator 3, forms a connecting hole in a portion of the device housing 11.

In the present embodiment the thermostat housing 11 is bolted to an engine block 1A of the engine 1. Note that, instead of the engine block 1A, a stand-alone device body may be used, and a passage formed therein as appropriate.

Reference numeral 13 in FIG. 1 denotes an engine coolant outlet passage, configured to supply coolant inside the engine 1 to the heater 7. Reference numeral 14 is the main valve of the thermostat device, connecting and disconnecting this engine coolant outlet passage 13 to and from the passage 12 to the radiator 3. The opening and closing of a portion of this valve (a first valve, from its relation to a second valve described later) coolant from the engine 1 is selectively supplied to the radiator 3.

Reference numeral 15 in FIG. 1 is a thermo-element. A piston 15a expands and contracts with the temperature of the coolant inside the engine coolant outlet passage 13 to open and close the main valve 14 which is the first valve. Note that reference numeral 16 is the main spring, a coil spring that biases the first valve of the main valve 14 toward the closed position.

A return passage 20 for returning coolant from the heater 8 or the radiator 3 to the engine coolant intake via the water pump 5 is formed in the engine block 1A functioning as the device body, and spaces 21 and 22 are formed therein at the passages 13, 20 corresponding to the place where the thermostat device 10 is mounted. Further, an opening 23 is formed that communicates between these spaces 21, 22.

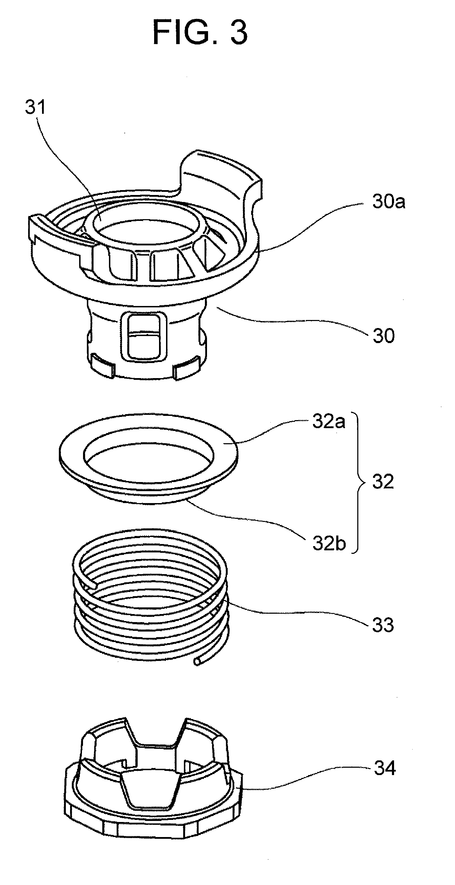

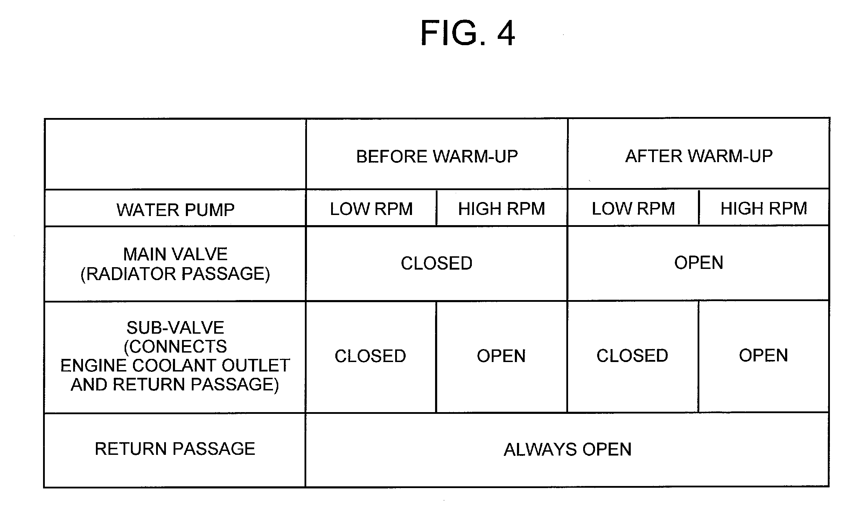

Reference numeral 30 denotes a substantially cylindrical device frame, configured as a whole to fit the opening 23, having a flange 30a on the connecting hole 31 (the bypass passage 6) that configures a sub-valve (bypass valve) that is a distinctive feature of the present invention. As is clear from FIG. 3 and FIG. 4, the device frame 30 is configured to be engaged and held by a pair of legs 11 b, 11c depending from the bottom of the device housing 11.

In FIG. 3, reference numeral 32 is the second valve, configured to have a flange shape in cross-section, for example, an annular member having an upside-down L shape in cross-section, and constructed of a valve part 32a and a guide ring 32b for opening and closing the connecting hole 31. This guide ring 32b is set so as to be movable within the cylindrical portion of the device frame 30, and is configured so that the connecting hole 31 formed at the flange 30a of the device frame 30 is opened and closed by the valve part 32a of this second valve 32 so as to open the bypass passage 6. This second valve 32 is biased by a coil spring 33 functioning as a sub-spring, and moreover is held in place by a stopper 34 fitted to the end of the cylindrical portion of the device frame 30, thereby completing the sub-valve assembly.

The cross-sectional shape of this second valve 32 is not limited to that of a flange or of a substantially upside-down L, provided that it has a projecting shape that fits the connecting hole 31. So long as the second valve 32 has a shape that fits the shape of the connecting hole 31 and is capable of closing the connecting hole 31, it may be of any shape.

Then, the second valve 32 that configures this sub-valve is configured to operate by a difference in pressure between the passages 21, 22 and against the biasing force of the coil spring 34 and unrelated to the movement of the thermo-element 15 described above.

It is to be noted that the guide ring 32b of the second valve 32 need not extend around the entire periphery thereof and instead may be configured as projections at multiple locations around the edge. In short, it is sufficient if this second valve 32 is movable in the axial direction around the cylindrical portion of the device fame 30, and opens and closes the connecting hole 31 by a pressure differential between the passages 21, 22 and against the biasing force of the coil spring 33 so as to open the bypass passage 6.

The sub-valve assembly described above can be easily installed in and held by the legs 11 b, 11 c of the device housing 11 that configure the thermostat device 10. In this assembled state, the device frame 30 is fitted onto the ends of the legs 11 b, 11 c of the device housing 11 by the main spring 16.

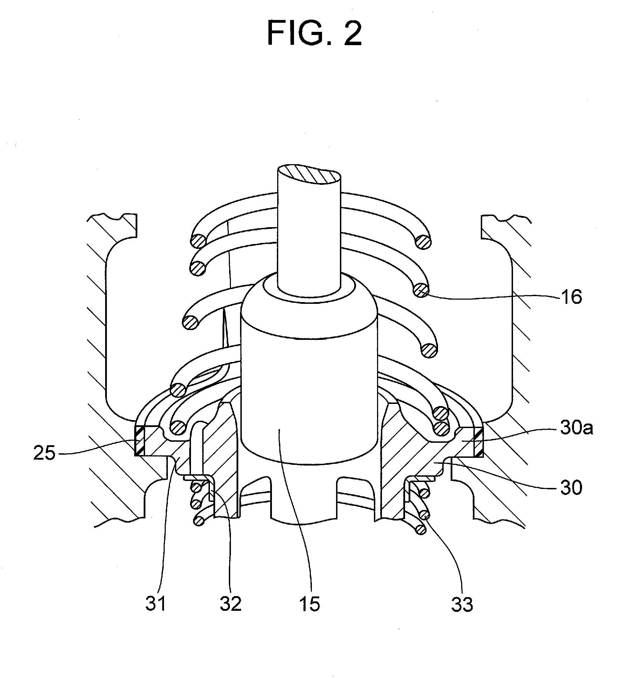

Reference numeral 25 in FIGS. 1 and 2 denotes a rubber ring fitted around and held by the outside of the flange 30a of the device frame 30, which is interposed into the opening 23 to ensure a good seal between a first passage that is the engine coolant outlet passage 13 and a third passage that is the return passage 20. Alternatively, the rubber ring 25 need not be located at the intermediate position described above and may instead be inserted between the opening 23 and the flange 30a of the device frame 30.

The thermostat device 10 with this type of sub-valve assembly installed therein is mounted on the engine block 1A that is the device body by inserting the thermo-element 15 and the sub-valve assembly including the device frame 30 into the engine block 1A space 21, opening 23, and space 22 that form a mounting portion. At that time, the device frame 30 is pressed by the main spring 16 and stably supported against the device body 11A.

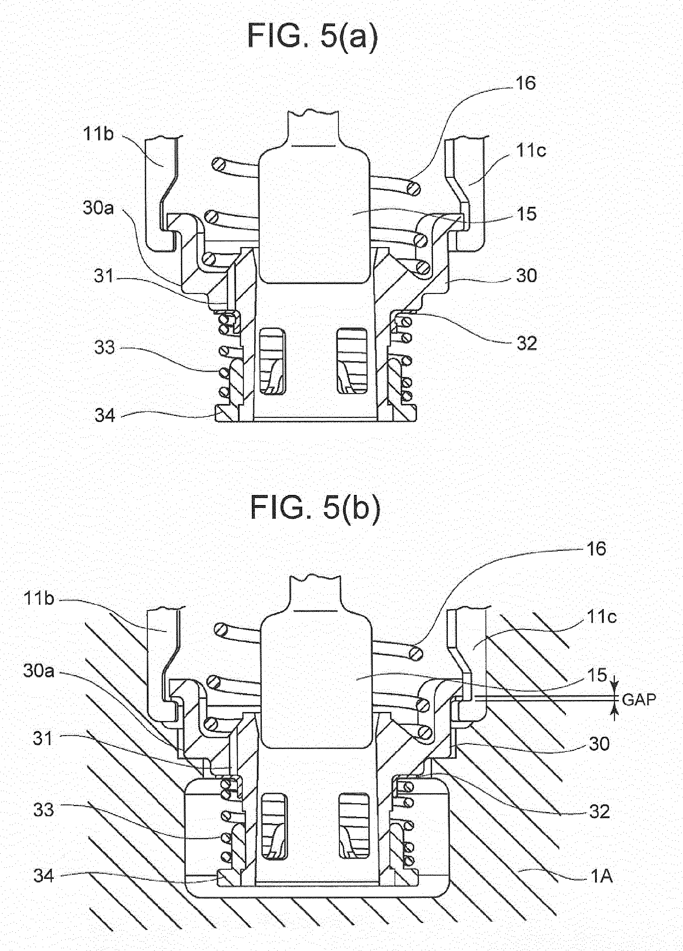

As shown in FIG. 5(a), with the thermostat device 10 with this type of sub-valve assembly installed therein described above, during assembly the flange 30a of the device frame 30 that is fitted onto the ends of the legs 11 b, 11 c of the device housing 11 is urged by the main spring 15 that forms a part of the main valve and is held thereat, thereby completing assembly of the thermostat device 10.

The thermostat device 10 described above is inserted into the device body (engine block) 1A at the portion where the spaces 21, 22 are located, aligned with the engine coolant outlet passage 13 and the return passage 20, and mounted in place.

In this mounting, the apparatus device 11 is installed in the device body 1A so that the device frame 30, as shown in FIG. 5(b) is released from its engaged state and urged by the main spring 16 against the device body 1A. At this time, a small gap is formed between the ends of the legs 11 b, 11 c of the device housing 11 and the flange 30a of the device frame 30.

With this configuration, the device frame 30 urged by the main spring 16 is securely held against the device body 1A, thereby providing a stable mounting for the thermostat device 10, facilitating installation.

In this thermostat device 10 obtained as described above, the main valve 14, the bypass valve, and the return passage 20, cooperate as shown in FIG. 4. More specifically, before the engine has warmed up the main valve is closed, and after the engine has warmed up the main valve is open. By contrast, the return passage 20 is always open. In addition, the bypass valve (sub-valve) is closed at low rpms and open at high rpms, regardless of whether the engine is warmed up or not.

With the configuration described above, by mounting the above-described sub-valve assembly together with the main spring 16 and the first valve 15 that configure the thermostat device 10, the thermostat valve (15) and the second valve 32 can be configured as a single integrated unit. Moreover, in this case, the above-described device frame 30 functions as a thermo-element 15 guide member and also as a seat for the main spring 16, with the advantages of reducing the number of constituent parts, improving ease of assembly, and reducing costs. In addition, the configuration described above also provides the advantages of enlarging the scope of layout design freedom of the thermostat device 10 and making it possible to make the engine 1 more compact.

With the configuration described above, the connecting hole 31 (the bypass passage 6) is integrated into the device frame 30, and moreover, the bypass valve which is the second valve can be produced easily as a single integrated unit by press-molding metal or plastic and has a simple structure, thereby facilitating production.

Further, with the configuration described above, an inexpensive coil spring with a simple structure can be employed, thereby facilitating assembly and reducing production costs.

In addition, with the configuration described above, the first passage and the third passage do not use a special seal structure, and the two passages can be separated with a simple structure consisting of the device frame 30 and the rubber ring 25, thereby facilitating installation of the thermostat device 10 on the engine 1 block 1A and reducing production costs.

It should be noted that the present invention is not limited to the structure described in the embodiments described above, and accordingly, the shapes and structures of the parts that constitute the thermostat device 10 may be modified and changed as convenient.

For example, the effects of the present invention can also be obtained with application of a thermostat device used for a cooling device for an automobile engine of a type that uses an electric pump not linked to the engine rpm.

### Reference Numbers

- 1: Engine
- 1A: Engine block (device body)
- 2: Radiator passage
- 3: Radiator
- 4: Return passage
- 5: Water pump
- 7: Heater
- 8: Heater passage
- 10: Thermostat device
- 11: Device housing
- 12: Passage (radiator side passage)
- 13: Engine coolant outlet passage
- 14: Main valve (first valve)
- 15: Thermo-element
- 16: Main spring
- 20: Return passage
- 21: Space
- 22: Space
- 23: Opening
- 25: Rubber ring
- 30: Device frame
- 30a: Flange
- 31: Connecting hole (bypass passage)
- 32: Second valve
- 33: Coil spring
- 34: Stopper

## Claims

1. A thermostat device (10) **characterized by** having:
a main valve (14) that controls a flow of coolant between a first passage (13) and a second passage (2), disposed in a cooling system of an automobile engine; and
a thermo-element (15) that drives the main valve (14) in accordance with a temperature of the coolant, disposed within the first passage (13),
**characterized in that** a device body (1A) in which the thermostat device (10) is installed is provided with a third passage (20),
**characterized in that** a second valve (32), which opens and closes a connecting hole (31) that connects the first passage (13) and the third passage (20) when coolant pressure inside the cooling system exceeds a prescribed pressure, is integrated into a device frame (30) that holds the thermo-element (15).

2. The thermostat device (10) as claimed in claim 1, **characterized in that** the second valve (32) is configured to be movable along an axis of the device frame (30) that holds the thermo-element (15) and is biased by a coil spring (33) to cover the connecting hole (31) provided in a portion of the device frame (30), unrelated to movement of the thermo-element (15).

3. The thermostat device (10) as claimed in claim 1 or claim 2, **characterized in that** the coil spring (33) that biases the second valve (32) is configured to be held by engagement of a stopper (34) with a cylindrical end of the device frame (30).

4. The thermostat device (10) as claimed in any one of claims 1 through 3, **characterized in that** the device body (1A) has an opening (23) that connects the first passage (13) and the third passage (20) coaxial with the thermo-element (15),
a cylindrical portion of the device frame (30) is engaged and held by the opening (23), and
the device frame (30) is pressed by and contacted against the device body (1A) by a main spring (16) that biases the main valve (14) to separate the first passage (13) and the third passage (20).

5. The thermostat device (10) as claimed in any one of claims 1 through 4, **characterized in that** the thermostat device (10) comprises a device housing (11) that supports a first valve that configures the main valve (14) and the thermo-element (15) that drives the first valve (14),
**characterized in that** the device frame (30) is fitted to the thermo-element (15) in a state in which the thermo-element (15) is movable within the device frame (30), urged against a portion of the device housing (11) by the main spring (16), and **in that** state the device housing (11) is installed on the device body (1A), such that the device frame (30) is released from the engaged state and urged toward the device body (1A) by the main spring (16).
